# EUROPÄISCHE PATENTANMELDUNG

(11) **EP 3 118 782 A1**
(43) Veröffentlichungstag der Anmeldung: **18.01.2017**
(21) Anmeldenummer: 16175798.4
(22) Anmeldetag: 22.06.2016
(51) Int. Cl.: G06Q 10/04, G06Q 10/08

(54) **BELADUNGSEMPFEHLUNG UND LADUNGSSICHERUNGSEMPFEHLUNG FÜR EIN FAHRZEUG**

(30) Priorität: 14.07.2015 DE 102015213197
(71) Anmelder: Volkswagen Aktiengesellschaft, 38440 Wolfsburg (DE)
(72) Erfinder: Groß, Philipp, 38118 Braunschweig (DE); Oster, Lutz, 38108 Braunschweig (DE)

(57) **Zusammenfassung**

Die vorliegende Erfindung betrifft ein Verfahren (10) zum Bestimmen einer Beladungsempfehlung für ein Fahrzeug (61). Bei dem Verfahren werden Objektabmessungen von Objekten (62, 63), mit denen das Fahrzeug (61) zu beladen ist, automatisch mit Hilfe einer optischen Erfassungsvorrichtung (21) bestimmt und eine Anordnung der Objekte (62, 63) in einem Laderaum des Fahrzeugs (61) in Abhängigkeit von den Objektabmessungen der Objekte (62, 63) und einer Laderaumabmessung des Laderaums bestimmt. Die Anordnung der Objekte (62, 63) in dem Laderaum wird als Beladungsempfehlung ausgegeben.

## Beschreibung

Die vorliegende Erfindung betrifft ein Verfahren zum Bestimmen einer Beladungsempfehlung für ein Fahrzeug sowie ein Verfahren zum Bestimmen einer Ladungssicherungsempfehlung für ein Fahrzeug. Die vorliegende Erfindung betrifft insbesondere ein Verfahren zum Bestimmen einer Beladungempfehlung, bei welchem Objektabmessungen von Objekten, mit welchen das Fahrzeug zu beladen ist, automatisch mit Hilfe einer optischen Erfassungsvorrichtung bestimmt werden.

Ein Beladen eines Fahrzeugs, beispielsweise eines Personenkraftwagens oder eines Lastkraftwagens, mit Objekten, beispielsweise Gepäckstücken oder Frachtstücken, erfordert eine planerische Tätigkeit, um den Laderaum des Fahrzeugs effizient nutzen zu können und einen sicheren Transport der Objekte zu gewährleisten. Zur Unterstützung dieser Beladungsplanung sind insbesondere für Lastkraftwagen und Container Planungshilfsmittel als Anwendungsprogramme beispielsweise im Internet verfügbar, welche beispielsweise auf tragbaren Vorrichtungen, sogenannten Tablet-PCs, ausgeführt werden können und eine Visualisierung für eine Beladung bereitstellen. Dabei können verschiedene Randbedingungen, wie zum Beispiel Achsbelastungen oder Einschränkungen des Laderaums sowie eine Be- und Entladereihenfolge, berücksichtigt werden.

Die verfügbaren Planungsprogramme sind jedoch im Wesentlichen auf Transporte im Güterverkehr ausgerichtet und daher besteht ein Bedarf an verbesserter Planungssoftware, welche insbesondere auch bei der Beladung von Personenkraftwagen eine wertvolle Hilfe bietet.

Gemäß der vorliegenden Erfindung werden daher ein Verfahren zum Bestimmen einer Beladungsempfehlung für ein Fahrzeug nach Anspruch 1, ein Verfahren zum Bestimmen einer Ladungssicherungsempfehlung für ein Fahrzeug nach Anspruch 5, eine Vorrichtung zum Bestimmen einer Beladungsempfehlung für ein Fahrzeug nach Anspruch 13, eine Vorrichtung zum Bestimmen einer Ladungssicherungsempfehlung für ein Fahrzeug nach Anspruch 14 und ein Computerprogrammprodukt nach Anspruch 15 bereitgestellt. Die abhängigen Ansprüche definieren bevorzugte und vorteilhafte Ausführungsformen der Erfindung.

Gemäß der vorliegenden Erfindung wird ein Verfahren zum Bestimmen einer Beladungsempfehlung für ein Fahrzeug bereitgestellt. Bei dem Verfahren werden Objektabmessungen von Objekten, mit denen das Fahrzeug zu beladen ist, bestimmt. Die Objektabmessungen der Objekte werden automatisch mit Hilfe einer optischen Erfassungsvorrichtung bestimmt. In Abhängigkeit von den Objektabmessungen der Objekte und einer Laderaumabmessung eines Laderaums des Fahrzeugs wird eine Anordnung der Objekte in dem Laderaum des Fahrzeugs automatisch bestimmt. Diese Anordnung der Objekte in dem Laderaum des Fahrzeugs wird als Beladungsempfehlung ausgegeben. Das Verfahren kann beispielsweise auf einem mobilen Endgerät, beispielsweise einem Smartphone oder einem Tablet-PC, oder einem sonstigen Computersystem durchgeführt werden. Die ermittelte Anordnung der Objekte in dem Laderaum kann beispielsweise als eine graphische, dreidimensionale Darstellung ausgegeben werden. Die Objekte können beispielsweise Gepäckstücke oder sonstige Packstücke umfassen, welche in den Laderaum des Fahrzeugs einzuladen sind. Der Laderaum des Fahrzeugs kann beispielsweise einen Kofferraum eines Personenkraftwagens oder eine Ladefläche eines Lieferwagens umfassen. Indem die Objektabmessungen der Objekte automatisch mit Hilfe der optischen Erfassungsvorrichtung bestimmt werden, kann ein aufwendiges Vermessen der Objekte und eine entsprechende Eingabe der Maße der Objekte vermieden werden. Dadurch ist das Verfahren insbesondere beim Beladen eines Personenkraftwagens oder eines kleinen Lastkraftwagens vorteilhaft verwendbar, beispielsweise beim Packen eines Personenkraftwagens bei einer Urlaubsfahrt oder beim Beladen eines Lieferfahrzeugs mit auszuliefernden Packstücken unterschiedlicher Form und Größe.

Gemäß einer Ausführungsform werden die Objektabmessungen der Objekte, mit denen das Fahrzeug zu beladen ist, bestimmt, indem ein Abbild von einem oder mehreren der Objekte mit Hilfe der optischen Erfassungsvorrichtung erfasst wird. Die Abmessungen des Objekts werden aus dem erfassten Abbild bestimmt. Die optische Erfassungsvorrichtung kann beispielsweise eine Kamera umfassen, welche eine Entfernungsinformation für eine Entfernung zwischen der Kamera und dem Objekt bereitstellt. Unter Berücksichtigung von Informationen des Linsensystems der Kamera und der Entfernung zwischen der Kamera und dem Objekt können die Abmessungen des Objekts bestimmt werden. Alternativ oder zusätzlich können ein Objekt oder mehrere Objekte der einzuladenden Objekte zusammen mit einem bestimmten Referenzobjekt mit Hilfe der optischen Erfassungsvorrichtung erfasst werden. Das Referenzobjekt kann beispielsweise ein Fahrzeugschlüssel, eine Parkscheibe oder dergleichen umfassen, sodass die Abmessungen des Referenzobjekts bekannt sind. Dadurch steht in dem Abbild des Objekts oder der mehreren Objekte ein Maßstab zur Verfügung, sodass die Abmessungen des Objekts oder der mehreren Objekte aus dem Abbild in Verbindung mit dem Referenzobjekt bestimmt werden können.

Bei einer weiteren Ausführungsform werden die Objektabmessungen der Objekte, mit denen das Fahrzeug zu beladen ist, bestimmt, indem mit Hilfe der optischen Erfassungsvorrichtung ein optischer Code erfasst wird, welcher an einem jeweiligen Objekt angebracht ist. Der optische Code kann beispielsweise ein Barcode oder ein 2D-Code sein. Die Abmessungen des Objekts werden dann in Abhängigkeit von dem optischen Code bestimmt. Beispielsweise kann ein optischer Code auf einem Packstück, einem Koffer oder einem sonstigen Gegenstand vorhanden sein. Aus einer Datenbank, auf welche beispielsweise über das Internet zugegriffen wird, können die Abmessungen anhand des optischen Codes abgerufen werden. Somit können die Abmessungen der in den Laderaum des Fahrzeugs zu ladenden Objekte zuverlässig und auf einfache Art und Weise bestimmt werden.

Alternativ oder zusätzlich kann auch eine Artikelnummer, welche auf dem Objekt angegeben ist, optisch erfasst werden und die Abmessungen des Objekts können in Abhängigkeit von der Artikelnummer bestimmt werden. Ferner kann die Artikelnummer aus elektronisch verfügbaren Daten, beispielsweise aus einer Bestellung des Objekts, direkt übernommen werden und die Abmessungen des Objekts können in Abhängigkeit von der Artikelnummer bestimmt werden.

Gemäß der vorliegenden Erfindung wird ferner ein Verfahren zum Bestimmen einer Ladungssicherungsempfehlung für ein Fahrzeug bereitgestellt. Bei dem Verfahren werden Objektabmessungen von Objekten, mit denen das Fahrzeug zu beladen ist, bestimmt und eine Anordnung der Objekte in einem Laderaum des Fahrzeugs in Abhängigkeit von den Objektabmessungen der Objekte und einer Laderaumabmessung des Laderaums bestimmt. In Abhängigkeit von der Anordnung der Objekte in dem Laderaum wird eine Sicherung für die in dem Laderaum angeordneten Objekte bestimmt. Die Sicherung ist derart ausgestaltet, dass sie eine Bewegung der Objekte in dem Laderaum einschränkt. Die Sicherung kann beispielsweise Transportnetze, Transportgurte an bestimmten Befestigungspunkten des Fahrzeugs oder Sicherheitsgurte des Fahrzeugs umfassen. Die so bestimmte Sicherung für die Objekte wird als Ladungssicherungsempfehlung ausgegeben. Indem neben der Anordnung für die Beladung auch eine Ladungssicherung bestimmt wird, kann ein sicherer Transport von Objekten mit dem Fahrzeug erreicht werden.

Gemäß einer Ausführungsform wird die Sicherung für die in dem Laderaum angeordneten Objekte bestimmt, indem ein Fahrzeugidentifikationskennzeichen des Fahrzeugs erfasst wird und in Abhängigkeit davon Sicherungsmöglichkeiten in dem Laderaum des Fahrzeugs bestimmt werden. Die Sicherung für die in dem Laderaum angeordneten Objekte wird in Abhängigkeit von den bestimmten Sicherungsmöglichkeiten ermittelt. Das Fahrzeugidentifikationskennzeichen kann beispielsweise eine Fahrzeugmarke und ein Fahrzeugtyp oder eine Fahrzeugidentifikationsnummer umfassen. Dadurch können Sicherungsmöglichkeiten, wie zum Beispiel Befestigungspunkte für Spanngurte oder Transportnetze, auf einfache Art und Weise zuverlässig ermittelt werden und bei der Bestimmung der Sicherung für die in dem Laderaum angeordneten Objekte berücksichtigt werden.

Gemäß einer weiteren Ausführungsform der vorliegenden Erfindungsmeldung können sowohl bei dem Verfahren zur Bestimmung der Beladungsempfehlung als auch bei dem Verfahren zur Bestimmung der Ladungssicherungsempfehlung zusätzlich Gewichte der Objekte, mit denen das Fahrzeug zu beladen ist, bestimmt werden. Die Anordnung der Objekte in dem Laderaum wird zusätzlich in Abhängigkeit von den Gewichten der Objekte bestimmt. Beispielsweise können bei der Anordnung der Objekte schwerere Objekte weiter unten angeordnet werden und leichtere Objekte weiter oben. Darüber hinaus können schwerere Objekte in Bereichen angeordnet werden, welche höher belastbare Ladungssicherungsmöglichkeiten aufweisen, wohingegen leichtere Objekte beispielsweise in Bereichen angeordnet werden, welche lediglich durch ein Fangnetz gesichert sind.

Bei einer weiteren Ausführungsform können bei den zuvor genannten Verfahren zusätzlich Gewichte der Objekte, mit denen das Fahrzeug zu beladen ist, bestimmt werden und eine Einstellung für eine Scheinwerferausrichtung des Fahrzeugs in Abhängigkeit von den Gewichten der Objekte und der Anordnung der Objekte in dem Laderaum bestimmt werden. Die so bestimmte Einstellung für die Scheinwerferausrichtung kann beispielsweise als Empfehlung zur Einstellung einer Scheinwerferniveauregulierung ausgegeben werden und ein Benutzer des Fahrzeugs kann eine entsprechende Scheinwerferniveauregulierung einstellen. Dadurch kann eine Blendung anderer Verkehrsteilnehmer durch Scheinwerfer des Fahrzeugs im beladenen Zustand vermieden werden.

Ferner können bei dem Verfahren zusätzlich Gewichtsschwerpunkte der Objekte, mit denen das Fahrzeug zu beladen ist, bestimmt werden. Die Gewichtsschwerpunkte der Objekte können beispielsweise über eine graphische Benutzeroberfläche von einem Benutzer durch eine Berührung des ungefähren Gewichtsschwerpunkts eingegeben werden, nachdem die Objekte optisch erfasst und graphisch dargestellt wurden. Die Anordnung der Objekte in dem Laderaum wird zusätzlich in Abhängigkeit von den Gewichtsschwerpunkten der Objekte bestimmt. Dadurch kann beispielsweise erreicht werden, dass die Objekte, wenn sie in dem Laderaum gemäß der bestimmten Anordnung angeordnet sind, stabil gelagert werden, sodass ein Kippen der Objekte, beispielsweise beim Bremsen oder in Kurvenfahrten oder bei Beschleunigungen, vermieden werden kann.

Die zuvor beschriebenen Verfahren können dahingehend erweitert werden, dass zusätzlich eine Beladungsreihenfolge, in welcher die Objekte in den Laderaum zu laden sind, bestimmt wird, und diese bestimmte Beladungsreihenfolge ausgegeben wird. Dadurch kann das Beladen des Fahrzeugs deutlich vereinfacht und beschleunigt werden.

Gemäß einer Ausführungsform werden die Laderaumabmessungen des Laderaums des Fahrzeugs bestimmt, indem ein Fahrzeugidentifikationskennzeichen des Fahrzeugs erfasst wird und die Laderaumabmessungen in Abhängigkeit von dem Fahrzeugidentifikationskennzeichen aus beispielsweise einer Datenbank ermittelt werden. Das Fahrzeugidentifikationskennzeichen, beispielweise Fahrzeughersteller und Fahrzeugtyp oder eine Fahrzeugidentifikationsnummer, können beispielsweise von einem Benutzer des Fahrzeugs eingegeben werden. Dadurch können auf einfache Art und Weise exakte Laderaumabmessungen für den Laderaum des Fahrzeugs bereitgestellt werden, sodass eine Berechnung für die Anordnung der in den Laderaum zu ladenden Objekte mit hoher Genauigkeit durchgeführt werden kann.

Weiterhin kann eine Sitzkonfiguration des Fahrzeugs erfasst werden und die Laderaumabmessung des Laderaums des Fahrzeugs in Abhängigkeit von der Sitzkonfiguration bestimmt werden. Bei vielen Fahrzeugen kann der Laderaum durch Umlegen oder Herausnehmen von Sitzen variabel gestaltet werden. Über eine entsprechende, beispielweise graphische Benutzeroberfläche, kann ein Benutzer beispielsweise die aktuelle oder gewünschte Sitzkonfiguration des Fahrzeugs eingeben und diese Sitzkonfiguration kann bei der Bestimmung der Beladungsempfehlung oder Ladungssicherungsempfehlung berücksichtigt werden.

Gemäß der vorliegenden Erfindung wird weiterhin eine Vorrichtung zum Bestimmen einer Beladungsempfehlung für ein Fahrzeug bereitgestellt. Die Vorrichtung umfasst eine optische Erfassungsvorrichtung, beispielweise eine Kamera, eine graphische Benutzerschnittstelle und eine Verarbeitungsvorrichtung. Die Verarbeitungsvorrichtung ist in der Lage, Objektabmessungen von Objekten, mit denen das Fahrzeug zu beladen ist, automatisch mit Hilfe der optischen Erfassungsvorrichtung zu bestimmen. Auf der Grundlage der Objektabmessungen der Objekte und einer Laderaumabmessung eines Laderaums des Fahrzeugs ist die Verarbeitungsvorrichtung in der Lage, eine Anordnung der Objekte in dem Laderaum des Fahrzeugs zu bestimmen. Die Anordnung der Objekte in dem Laderaum wird von der Verarbeitungsvorrichtung als Beladungsempfehlung über die graphische Benutzeroberfläche ausgegeben. Die Vorrichtung kann beispielsweise ein Smartphone oder ein Tablet-PC sein, sodass die Kamera des Smartphones oder des Tablet-PCs als optische Erfassungsvorrichtung verwendet werden kann. Als graphische Benutzeroberfläche kann der berührungssensitive Bildschirm des Smartphones oder des Tablet-PCs verwendet werden. Dadurch kann die Beladungsempfehlung beispielsweise beim Packen eines Fahrzeugs für eine Urlaubsfahrt auf einfache Art und Weise bestimmt werden und von einem Benutzer beim Beladen des Fahrzeugs berücksichtigt werden. Ferner ist die Vorrichtung zur Durchführung des zuvor beschriebenen Verfahrens und seinen Ausführungsformen geeignet und umfasst daher auch die zuvor beschriebenen Vorteile.

Gemäß der vorliegenden Erfindung wird eine weitere Vorrichtung bereitgestellt, welche zum Bestimmen einer Ladungssicherungsempfehlung für ein Fahrzeug dient. Die Vorrichtung umfasst eine graphische Benutzerschnittstelle und eine Verarbeitungsvorrichtung, welche in der Lage ist, Objektabmessungen von Objekten, mit denen das Fahrzeug zu beladen ist, zu bestimmen und eine Anordnung der Objekte in einem Laderaum des Fahrzeugs in Abhängigkeit von den Objektabmessungen der Objekte und einer Laderaumabmessung des Laderaums zu bestimmen. Die Verarbeitungsvorrichtung ist ferner ausgestaltet, eine Sicherung für die in dem Laderaum angeordneten Objekte in Abhängigkeit von der Anordnung der Objekte in dem Laderaum zu bestimmen und die Sicherung für die Objekte als Ladungssicherungsempfehlung über die graphische Benutzeroberfläche auszugeben. Dabei dient die Sicherung dazu, eine Bewegung der Objekte in dem Laderaum einzuschränken. Die Vorrichtung ist daher zur Durchführung der zuvor beschriebenen Verfahren geeignet und umfasst daher auch die zuvor beschriebenen Vorteile. Die Vorrichtung kann insbesondere eine tragbare Vorrichtung, wie zum Beispiel ein Smartphone oder ein Tablet-PC sein, sodass die Bestimmung der Ladungssicherungsempfehlung beim Beladen des Fahrzeugs durchgeführt werden kann und die entsprechende Ladungssicherung eingerichtet werden kann, während sie einem Benutzer als Ladungssicherungsempfehlung über die graphische Benutzerschnittstelle ausgegeben wird.

Schließlich wird gemäß der vorliegenden Erfindung ein Computerprogrammprodukt bereitgestellt, welches ein Programm umfasst und direkt in einen Speicher einer programmierbaren Vorrichtung ladbar ist. Das Computerprogrammprodukt umfasst Programmmittel, um alle Schritte der zuvor beschriebenen Verfahren auszuführen, wenn das Programm in der programmierbaren Vorrichtung ausgeführt wird. Die programmierbare Vorrichtung kann beispielsweise ein Prozessor einer tragbaren Vorrichtung, insbesondere eines Smartphones oder Tablet-PCs sein. Das Computerprogrammprodukt kann daher eine sogenannte App sein, welche auf das Smartphone oder den Tablet-PC geladen wird, um eine Beladungsempfehlung und/oder eine Ladungssicherungsempfehlung zu bestimmen und an den Benutzer auszugeben.

Obwohl die obigen Ausführungsformen unabhängig voneinander beschrieben wurden, können diese beliebig miteinander kombiniert werden.

Im Folgenden wird die vorliegende Erfindung anhand erfindungsgemäßer Ausführungsformen unter Bezugnahme auf die Figuren im Detail beschrieben.
Fig. 1 zeigt Verfahrensschritte eines Verfahrens gemäß einer Ausführungsform der vorliegenden Erfindung.
Fig. 2 zeigt schematisch eine Vorrichtung gemäß einer Ausführungsform der vorliegenden Erfindung.
Fig. 3-6 zeigen Ausgaben auf einer graphischen Benutzerschnittstelle gemäß einer Ausführungsform der vorliegenden Erfindung.

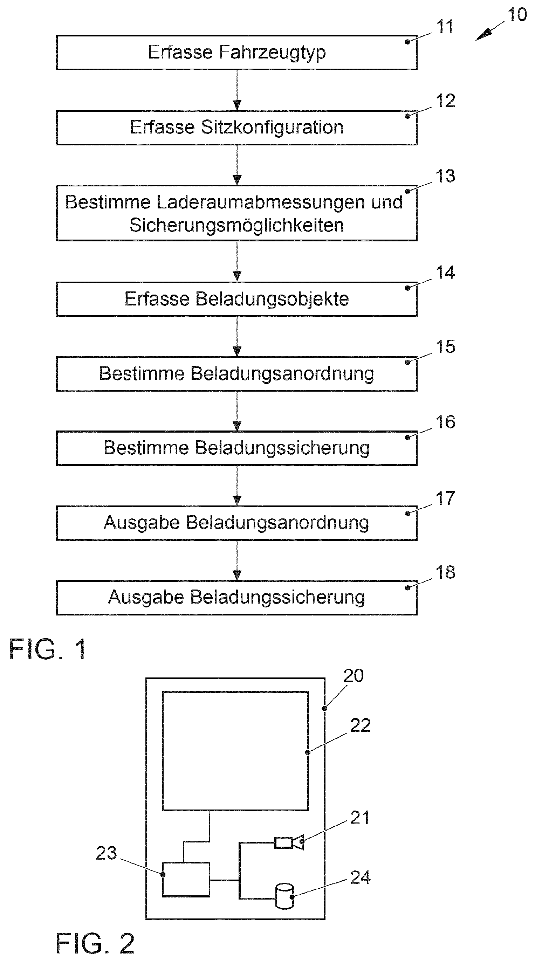

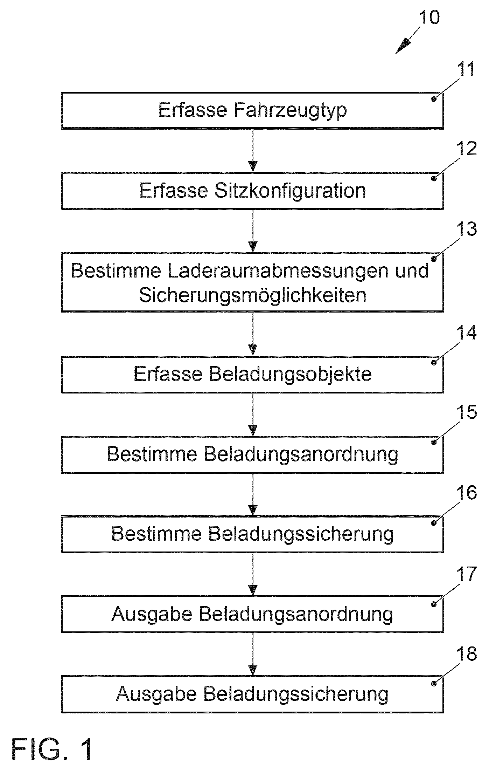

Fig. 1 zeigt ein Verfahren 10 zum Bestimmen einer Beladungsempfehlung und einer Ladungssicherungsempfehlung für ein Fahrzeug. Das Verfahren umfasst Verfahrensschritte 11-18. Das Verfahren 10 kann beispielsweise von einer Vorrichtung 20 ausgeführt werden, welche in Fig. 2 gezeigt ist. Die Vorrichtung 20 kann beispielsweise ein mobiles Endgerät sein, wie zum Beispiel ein Smartphone oder Tablet-PC. Die Vorrichtung 20 umfasst eine optische Erfassungsvorrichtung 21, eine graphische Benutzerschnittstelle 22, eine Verarbeitungsvorrichtung 23 sowie einen Speicher 24 zum Speichern von Daten und Programmen, sogenannten Apps. Die optische Erfassungsvorrichtung 21 kann beispielsweise eine Kamera sein, welche beispielsweise an einer Rückseite der Vorrichtung 20 angebracht ist und in der Lage ist, ein Abbild eines Umgebungsbereichs der Vorrichtung 20 optisch zu erfassen. Die graphische Benutzerschnittstelle 22 kann beispielsweise einen sogenannten Touchscreen umfassen, welcher eine berührungssensitive Oberfläche sowie eine graphische Anzeigevorrichtung umfasst. Die Verarbeitungsvorrichtung 23 kann beispielsweise einen Mikroprozessor oder einen Mikrocontroller umfassen, welcher ausgestaltet ist, ein in dem Speicher 24 abgelegtes Programm auszuführen, wodurch die Schritte 11-18 des Verfahrens 10 ausgeführt werden, wenn das Programm in der Verarbeitungsvorrichtung 23 ausgeführt wird.

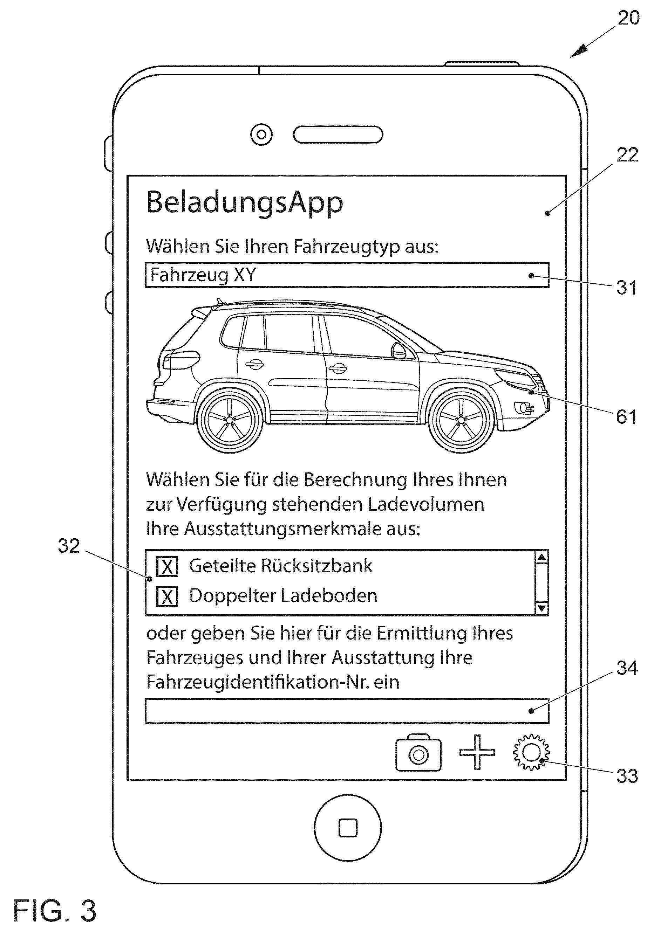

Bei dem in Fig. 1 gezeigten Verfahren 10 wird in Schritt 11 ein Fahrzeugtyp eines Fahrzeugs, welches zu beladen ist, erfasst. Fig. 3 zeigt eine entsprechende Ausgabe auf der graphischen Benutzeroberfläche 22 der Vorrichtung 20. In einem Feld 31 kann beispielsweise über ein sogenanntes Pull-Down-Menü ein Fahrzeugtyp aus einer vorgegebenen Liste ausgewählt werden. Eine Darstellung des zu beladenden Fahrzeugs 61 kann auf der graphischen Benutzeroberfläche angezeigt werden. Besondere Ausstattungsmerkmale des ausgewählten Fahrzeugtyps, welche den Laderaum beeinflussen, können zusätzlich abgefragt werden. Beispielsweise kann ein Benutzer über ein Feld 32 Ausstattungsvarianten des ausgewählten Fahrzeugs angeben. Das Feld 32 kann beispielsweise ein Auswahlmenüfeld umfassen, in welchem die relevanten Ausstattungsmerkmale aufgeführt und auswählbar sind, beispielsweise ob das Fahrzeug 61 eine geteilte Rücksitzbank aufweist und/oder ob das Fahrzeug 61 über einen doppelten Ladeboden verfügt. Die in dem Feld 32 ausgewählten Ausstattungsmerkmale können über eine "oder"-Verknüpfung bei der Bestimmung des zur Verfügung stehenden Ladevolumens berücksichtigt werden. Alternativ kann eine Fahrzeugidentifikationsnummer in einem Feld 34 von einem Benutzer eingegeben werden oder mit Hilfe der optischen Erfassungsvorrichtung 21 erfasst werden und in dem Feld 34 dargestellt werden. Über beispielsweise eine Serverabfrage können auf der Grundlage der Fahrzeugidentifikationsnummer ladevolumenrelevante Merkmale des Fahrzeugs 61 abgerufen werden, wie zum Beispiel, ob die Rücksitzbank geteilt ist, welche Sitze umklappbar sind und welche Sicherungsmöglichkeiten zur Ladungssicherung in dem Fahrzeug 61 vorgesehen sind, beispielsweise wo Verankerungspunkte für Spanngurte vorgesehen sind und ob ein Transportnetz vorhanden oder anbringbar ist. Der so spezifizierte Fahrzeugtyp kann dauerhaft in dem Speicher 24 abgelegt werden, sodass bei einer weiteren Anwendung des Verfahrens diese Fahrzeuginformationen bereitgestellt werden können.

In einem nicht gezeigten Menü, welches beispielsweise durch Betätigen des Symbols 33 aufgerufen werden kann, können allgemeine Einstellung durchgeführt werden, beispielsweise eine Sprachauswahl für die Benutzeroberfläche oder welches Maßsystem, z.B. metrisch oder angloamerikanisch, für Längen, Volumina und Gewichte auf der Benutzeroberfläche verwendet werden soll. In der vorliegenden Beschreibung werden die deutsche Sprache und metrische Einheiten (Meter, Liter und Kilogramm) für die Benutzeroberfläche verwendet. Bei anderen Einstellungen können beispielsweise die englische Sprache und angloamerikanische Einheiten (z.B. Zoll, Kubikfuß und Pfund) verwendet werden.

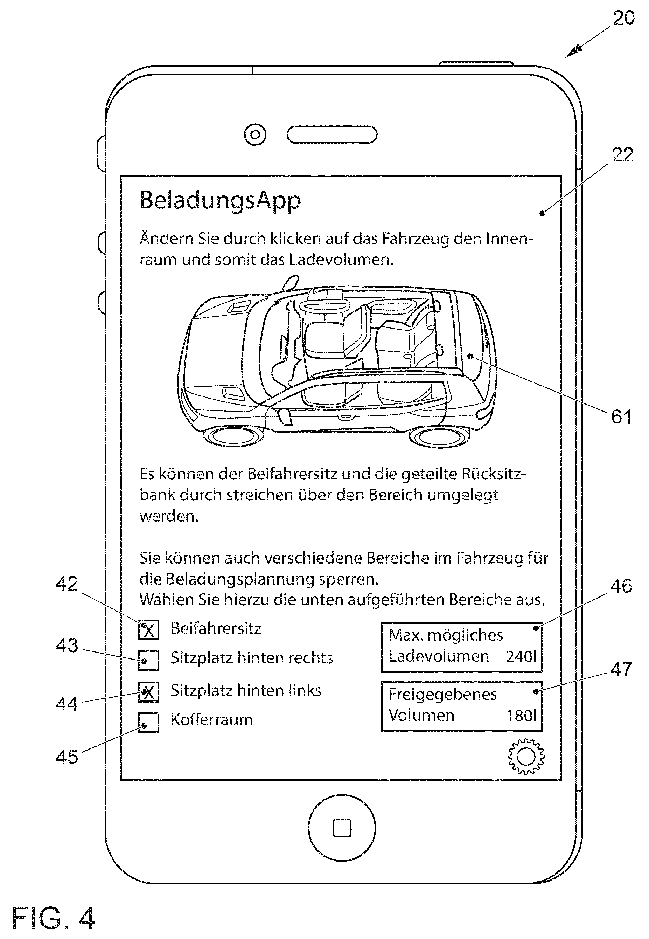

Im Schritt 12 des Verfahrens 10 wird eine gewünschte Sitzkonfiguration erfasst. Fig. 4 zeigt eine entsprechende Ausgabe auf der graphischen Benutzeroberfläche 22 der Vorrichtung 20. In Abhängigkeit davon, welche Sitze umgeklappt werden können und welche Sitze für Beladungszwecke freigegeben sind, ändert sich das maximal mögliche Ladevolumen. Umklappbare Sitze können beispielsweise durch Überstreichen der entsprechenden Sitzbereiche in einer Darstellung des Fahrzeugs 61 umgelegt oder aufgerichtet werden. Bereiche im Fahrzeug 61, welche von der Beladungsplanung nicht berücksichtigt werden sollen und daher für die Beladung gesperrt sind, können beispielsweise über Felder 42-45 konfiguriert werden. Das maximal mögliche Ladevolumen bei Ausschöpfung aller verfügbaren Bereiche im Fahrzeug 61 kann beispielsweise im Feld 46 angezeigt werden und das aktuell tatsächlich frei gegebene Volumen, welches sich unter Berücksichtigung der Eingabenfelder 42-45 ergibt, kann im Feld 47 angezeigt werden. Auf der Grundlage des Fahrzeugtyps und der zuvor beschriebenen Sitzkonfiguration können die für die Beladung relevanten Laderaumabmessungen im Schritt 13 bestimmt werden. Ferner können Sicherungsmöglichkeiten zur Sicherung der Ladung im Schritt 13 bestimmt werden. Darüber hinaus kann beispielsweise auch das maximal zulässige Zuladegewicht bestimmt werden, beispielsweise unter Berücksichtigung der Anzahl der Mitfahrer, welche sich aus den für die Beladung gesperrten Sitzen ergibt.

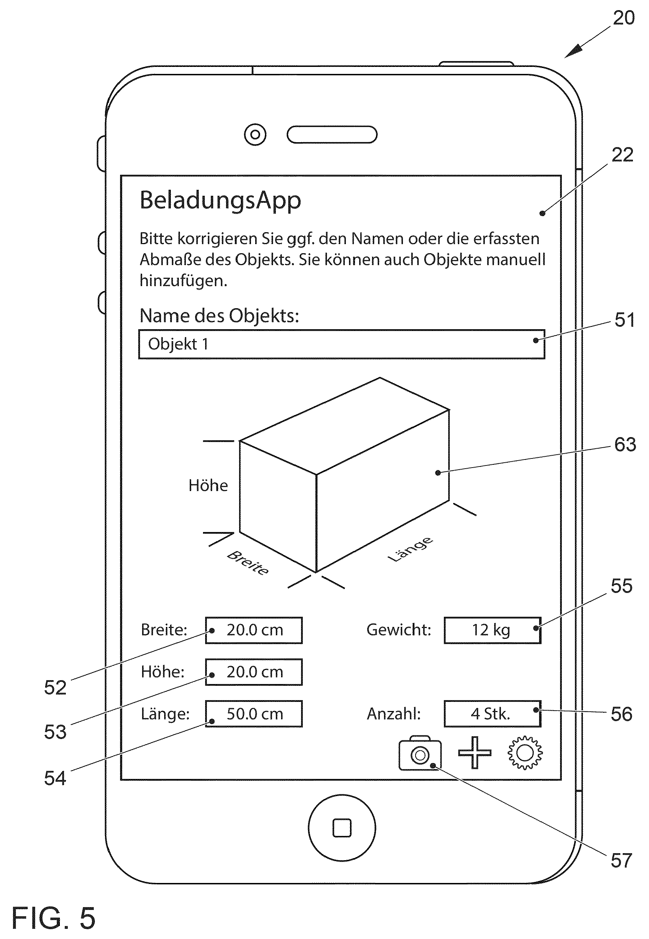

Im Schritt 14 des Verfahrens 10 werden die Objekte, welche in das Fahrzeug 61 zu laden sind, erfasst. Fig. 5 zeigt eine entsprechende Ausgabe auf der graphischen Benutzerschnittstelle 22 der Vorrichtung 20. Es können mehrere Objekte erfasst werden. Jedem Objekt 63 kann über ein Feld 51 ein Name gegeben werden. Eine Größe des Objekts 63 kann über Felder 52-54 manuell konfiguriert werden. Ebenso kann das Gewicht des Objekts 63 über ein Feld 55 eingestellt werden. Sollen mehrere Objekte gleicher Größe und gleichen Gewichts eingeladen werden, so kann die Anzahl über ein Feld 56 eingestellt werden. Alternativ oder zusätzlich können Objekte, welche in das Fahrzeug zu laden sind, mit der optischen Erfassungsvorrichtung 21 optisch erfasst werden, beispielsweise indem ein Kamerasymbol 57 betätigt wird, während die Kamera der Vorrichtung 20 auf das Objekt gerichtet wird. Mit Hilfe einer Bildanalyse können die Abmessungen des Objekts ermittelt werden. Beispielsweise kann dabei eine Entfernung zwischen der Kamera und dem Objekt in Verbindung mit optischen Eigenschaften der Kamera verwendet werden. Alternativ oder zusätzlich kann ein Referenzobjekt bekannter Größe an oder neben dem Objekt angeordnet werden, während das Objekt von der Kamera erfasst wird. Das Referenzobjekt kann beispielsweise eine Parkscheibe, ein Fahrzeugschlüssel oder eine Referenzvorlage umfassen. Die durch Analyse des Abbilds des Objekts ermittelten Abmessungen werden in den Feldern 52-54 angezeigt und können bei Bedarf von dem Benutzer korrigiert werden. Ferner kann eine graphische Darstellung des erfassten Objekts 63 angezeigt werden. Für den Fall, dass das Objekt 63 mit einem Barcode oder einem 2D-Code oder einem sonstigen optischen Code versehen ist, kann dieser Code von der optischen Erfassungsvorrichtung 21 aufgenommen werden und mit Hilfe des Codes können Informationen zu dem Objekt 63 aus einer Datenbank beispielsweise über das Internet abgerufen werden. Diese Informationen können beispielsweise Abmessungen des Objekts 63 sowie ein Gewicht des Objekts 63 umfassen, welche daraufhin in den Feldern 52-55 angezeigt werden können.

Nach der Erfassung der Objekte, welche in das Fahrzeug zu laden sind, wird im Schritt 15 des Verfahrens 10 eine Beladungsanordnung automatisch bestimmt. Bei einer Ausführungsform können die Abmessungen der Objekte als Quadermaße angenommen werden und eine entsprechende Beladungsanordnung ermittelt werden. Darüber hinaus kann die Verladbarkeit insgesamt bestimmt werden und eine entsprechende Meldung ausgegeben werden, wenn eine Verladung der erfassten Objekte nicht möglich ist. Bei einer anderen Ausführungsform können die zu verladenden Objekte in ihrer exakten Form berücksichtigt werden, sodass ein optimiertes Packkonzept ermittelt werden kann. Darüber hinaus kann eine Beladungsreihenfolge ermittelt werden, welche den Benutzer dabei unterstützt, die Objekte in der geplanten Beladungsanordnung in dem Fahrzeug anzuordnen. Bei der Bestimmung der Beladungsanordnung kann auch das Gewicht der einzelnen Objekte berücksichtigt werden, sodass beispielsweise schwerere Objekte weiter unten angeordnet werden, wohingegen leichtere Objekte weiter oben angeordnet werden. Auch der Schwerpunkt von Objekten kann bei der Anordnung der Objekte berücksichtigt werden. Zur Erfassung der Schwerpunkte kann der Benutzer beispielsweise in der in Fig. 5 gezeigten Ausgabe den Schwerpunkt des Objekts 63 in dem Abbild des Objekts 63 beispielsweise durch eine Berührung markieren.

Im Schritt 16 des Verfahrens 10 wird weiterhin automatisch eine Beladungssicherung bestimmt. In Abhängigkeit von der Anordnung der Objekte im Laderaum des Fahrzeugs und einer Anordnung von Befestigungspunkten für Transportsicherungen, wie zum Beispiel Transportnetzen oder Spanngurten, sowie unter Berücksichtigung des Gewichts der einzelnen Objekte kann eine Beladungssicherung bestimmt werden, welche verhindert, dass sich die Objekte im Laderaum bewegen, wenn Beschleunigungskräfte auf die Objekte durch die Fahrt des Fahrzeugs wirken.

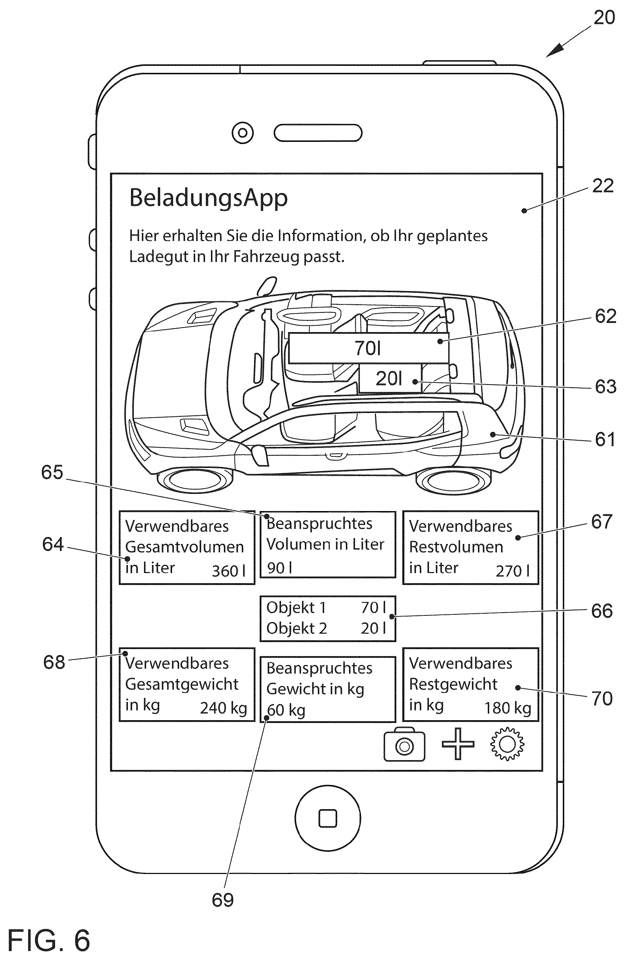

Im Schritt 17 des Verfahrens 10 wird die so bestimmte Beladungsanordnung an den Benutzer beispielsweise in graphischer Form ausgegeben. Fig. 6 zeigt eine entsprechende Ausgabe auf der graphischen Benutzerschnittstelle 22 der Vorrichtung 20. In einer Darstellung des Fahrzeugs 61 wird beispielhaft die Anordnung von zwei Objekten 62 und 63 graphisch dargestellt. Die Größen der jeweiligen Objekte in Litern werden zusätzlich angezeigt. Weitere Informationen, welche die Beladung betreffen, werden in Feldern 64-70 dargestellt. Feld 64 zeigt das insgesamt verfügbare oder verwendbare Volumen des Laderaums bei der gewählten Sitzkonfiguration, Feld 65 zeigt das derzeit von den Objekten 62, 63 beanspruchte Volumen und Feld 66 zeigt die Volumina der einzelnen Objekte. Aus dem verwendbaren Gesamtvolumen und dem derzeit beanspruchten Volumen ergibt sich ein verwendbares Restvolumen, welches in Feld 67 angezeigt wird. Feld 68 zeigt das verwendbare Gesamtgewicht für die Zuladung in Kilogramm an. Feld 69 zeigt das von den Objekten 62, 63 derzeit beanspruchte Gewicht und im Feld 70 wird das verfügbare Restgewicht angezeigt. Gegebenenfalls wird eine Überladung angezeigt, wenn das beanspruchte Gewicht das zur Verfügung stehende Gesamtgewicht überschreitet. Wenn der Benutzer mit der gewählten Anordnung der Objekte zufrieden ist und keine weiteren Objekte hinzufügen möchte, kann eine schrittweise animierte Laderaumvorbereitung und Packempfehlung ausgegeben werden. Die animierte Laderaumvorbereitung umfasst beispielsweise ein Umklappen und Verschieben von Sitzen oder der Rücksitzbank und die Packempfehlung umfasst beispielsweise eine Reihenfolge, mit welcher die Objekte 62, 63 in das Fahrzeug 61 einzuladen sind, sowie Ausrichtungen der Objekte 62 ,63 beim Einladen, wie zum Beispiel ein Abwinkeln, ein Drehen und die letztendliche Lage des Objekts. Schließlich kann im Schritt 18 des Verfahrens 10 eine Beladungssicherung ausgegeben werden. Beispielsweise können in einer entsprechenden Darstellung des Fahrzeugs 61 Empfehlungen angezeigt werden, wie beispielsweise Transportnetze anzubringen sind oder wie Spanngurte anzubringen sind.

Die Beladungsempfehlung und/oder die Ladungssicherungsempfehlung können alternativ oder zusätzlich ausgedruckt werden, beispielsweise indem die Beladungsempfehlung und/oder die Ladungssicherungsempfehlung über eine Funkschnittstelle, z.B. WLAN oder Bluetooth, von der Vorrichtung 20 zu einem Drucker gesendet werden.

Auf der Grundlage des beanspruchten Gewichts der Objekte, kann weiterhin beispielsweise eine Empfehlung zur manuellen Einstellung eines Scheinwerferniveaus des Fahrzeugs ausgegeben werden.

Die zuvor beschriebenen Verfahrensschritte können in der zuvor beschriebenen Reihenfolge durchgeführt werden. Es ist jedoch auch möglich, dass der Benutzer jederzeit zwischen den einzelnen Verfahrensschritten beliebig hin und her springt, beispielsweise die Sitzkonfiguration ändert, nachdem bereits einige Objekte eingegeben wurden. Weiterhin können bei der optischen Erfassung der Objektabmessungen mit Hilfe der optischen Erfassungsvorrichtung mehrere Objekte gleichzeitig erfasst und somit deren Abmessungen eingestellt werden. Weiterhin ist das zuvor beschriebene Verfahren nicht auf Anwendungen in Verbindung mit Personenkraftwagen beschränkt, sondern kann auch in Verbindung mit Lastkraftwagen oder Transportfahrzeugen verwendet werden.

### Bezugszeichenliste

- 10: Verfahren
- 11-18: Schritt
- 20: Vorrichtung
- 21: Optische Erfassungsvorrichtung
- 22: Graphische Benutzerschnittstelle
- 23: Verarbeitungsvorrichtung
- 24: Speicher
- 31: Feld
- 32: Feld
- 33: Symbol
- 34: Feld
- 42-47: Feld
- 51-56: Feld
- 57: Kamerasymbol
- 61: Fahrzeug
- 62, 63: Objekt
- 64-70: Feld

## Patentansprüche

1. Verfahren zum Bestimmen einer Beladungsempfehlung für ein Fahrzeug, umfassend:
- Bestimmen von Objektabmessungen von Objekten (62, 63), mit denen das Fahrzeug (61) zu beladen ist,
- Bestimmen einer Anordnung der Objekte (62, 63) in einem Laderaum des Fahrzeugs (61) in Abhängigkeit von den Objektabmessungen der Objekte (62, 63) und einer Laderaumabmessung des Laderaums, und
- Ausgeben der Anordnung der Objekte (62, 63) in dem Laderaum als Beladungsempfehlung,
**dadurch gekennzeichnet, dass** die Objektabmessungen der Objekte (62, 63) automatisch mit Hilfe einer optischen Erfassungsvorrichtung (21) bestimmt werden.

2. Verfahren nach Anspruch 1, **dadurch gekennzeichnet, dass** das Bestimmen der Objektabmessungen der Objekte (62, 63), mit denen das Fahrzeug (61) zu beladen ist, umfasst:
- Erfassen eines Abbilds von einem Objekt der Objekte (62, 63) mit Hilfe der optischen Erfassungsvorrichtung (21), und
- Bestimmen der Abmessungen des Objekts aus dem erfassten Abbild.

3. Verfahren nach Anspruch 1 oder 2, **dadurch gekennzeichnet, dass** das Bestimmen der Objektabmessungen der Objekte (62, 63), mit denen das Fahrzeug (61) zu beladen ist, umfasst:
- Erfassen eines Abbild von einem Objekt der Objekte (62, 63) zusammen mit einem bestimmten Referenzobjekt mit Hilfe der optischen Erfassungsvorrichtung (21), wobei das Referenzobjekt eine bekannte Abmessung aufweist, und
- Bestimmen der Abmessungen des Objekts aus dem Abbild des Objekts und des Referenzobjekts.

4. Verfahren nach einem der vorhergehenden Ansprüche, **dadurch gekennzeichnet, dass** das Bestimmen der Objektabmessungen der Objekte (62, 63), mit denen das Fahrzeug (61) zu beladen ist, umfasst:
- Erfassen eines optischen Codes, welcher an einem Objekt der Objekte (62, 63) angebracht ist, mit Hilfe der optischen Erfassungsvorrichtung (21), und
- Bestimmen der Abmessungen des Objekts in Abhängigkeit von dem optischen Code.

5. Verfahren zum Bestimmen einer Ladungssicherungsempfehlung für ein Fahrzeug, umfassend:
- Bestimmen von Objektabmessungen von Objekten (62, 63), mit denen das Fahrzeug (61) zu beladen ist, und
- Bestimmen einer Anordnung der Objekte (62, 63) in einem Laderaum des Fahrzeugs (61) in Abhängigkeit von den Objektabmessungen der Objekte (62, 63) und einer Laderaumabmessung des Laderaums,
**dadurch gekennzeichnet, dass** das Verfahren ferner umfasst:
- Bestimmen einer Sicherung für die in dem Laderaum angeordneten Objekte (62, 63) in Abhängigkeit von der Anordnung der Objekte (62, 63) in dem Laderaum, wobei die Sicherung eine Bewegung der Objekte (62, 63) in dem Laderaum einschränkt, und
- Ausgeben der Sicherung für die Objekte (62, 63) als Ladungssicherungsempfehlung.

6. Verfahren nach Anspruch 5, **dadurch gekennzeichnet, dass** das Bestimmen der Sicherung für die in dem Laderaum angeordneten Objekte (62, 63) umfasst:
- Erfassen eines Fahrzeugidentifikationskennzeichens (34) des Fahrzeugs (61),
- Bestimmen von Sicherungsmöglichkeiten in dem Laderaum des Fahrzeugs (61) in Abhängigkeit von dem Fahrzeugidentifikationskennzeichen (34), und
- Bestimmen der Sicherung für die in dem Laderaum angeordneten Objekte (62, 63) zusätzlich in Abhängigkeit von den bestimmten Sicherungsmöglichkeiten.

7. Verfahren nach einem der vorhergehenden Ansprüche, **dadurch gekennzeichnet, dass** das Verfahren ferner umfasst:
- Bestimmen von Gewichten der Objekte (62, 63), mit denen das Fahrzeug (61) zu beladen ist, und
- Bestimmen der Anordnung der Objekte (62, 63) in dem Laderaum zusätzlich in Abhängigkeit von den Gewichten der Objekte (62, 63).

8. Verfahren nach einem der vorhergehenden Ansprüche, **dadurch gekennzeichnet, dass** das Verfahren ferner umfasst:
- Bestimmen von Gewichten der Objekte (62, 63), mit denen das Fahrzeug (61) zu beladen ist, und
- Bestimmen einer Einstellung für eine Scheinwerferausrichtung des Fahrzeugs (61) in Abhängigkeit von den Gewichten der Objekte (62, 63) und der Anordnung der Objekte (62, 63) in dem Laderaum.

9. Verfahren nach einem der vorhergehenden Ansprüche, **dadurch gekennzeichnet, dass** das Verfahren ferner umfasst:
- Bestimmen von Gewichtsschwerpunkten der Objekte (62, 63), mit denen das Fahrzeug (61) zu beladen ist, und
- Bestimmen der Anordnung der Objekte (62, 63) in dem Laderaum zusätzlich in Abhängigkeit von den Gewichtsschwerpunkten der Objekte (62, 63).

10. Verfahren nach einem der vorhergehenden Ansprüche, **dadurch gekennzeichnet, dass** das Verfahren ferner umfasst:
- Bestimmen einer Beladungsreihenfolge, in welcher die Objekte (62, 63) in den Laderaum zu laden sind, und
- Ausgeben der bestimmten Beladungsreihenfolge.

11. Verfahren nach einem der vorhergehenden Ansprüche, **dadurch gekennzeichnet, dass** das Verfahren ferner umfasst:
- Erfassen eines Fahrzeugidentifikationskennzeichens (34) des Fahrzeugs (61), und
- Bestimmen der Laderaumabmessung des Laderaums des Fahrzeugs (61) in Abhängigkeit von dem Fahrzeugidentifikationskennzeichen (34).

12. Verfahren nach einem der vorhergehenden Ansprüche, **dadurch gekennzeichnet, dass** Verfahren ferner umfasst:
- Erfassen einer Sitzkonfiguration (42-45) des Fahrzeugs (61), und
- Bestimmen der Laderaumabmessung des Laderaums des Fahrzeugs in Abhängigkeit von der Sitzkonfiguration (42-45).

13. Vorrichtung zum Bestimmen einer Beladungsempfehlung für ein Fahrzeug, umfassend:
- eine optische Erfassungsvorrichtung (21),
- eine grafische Benutzerschnittstelle (22), und
- eine Verarbeitungsvorrichtung (23), welche ausgestaltet ist, Objektabmessungen von Objekten (62, 63), mit denen das Fahrzeug (61) zu beladen ist, zu bestimmen,
eine Anordnung der Objekte (62, 63) in einem Laderaum des Fahrzeugs (61) in Abhängigkeit von den Objektabmessungen der Objekte (62, 63) und einer Laderaumabmessung des Laderaums zu bestimmen, und
die Anordnung der Objekte (62, 63) in dem Laderaum als Beladungsempfehlung über die grafische Benutzeroberfläche (22) auszugeben,
**dadurch gekennzeichnet, dass** die Verarbeitungsvorrichtung (23) ferner ausgestaltet ist, die Objektabmessungen der Objekte (62, 63) automatisch mit Hilfe der optischen Erfassungsvorrichtung (21) zu bestimmen.

14. Vorrichtung zum Bestimmen einer Ladungssicherungsempfehlung für ein Fahrzeug, umfassend:
- eine grafische Benutzerschnittstelle (22), und
- eine Verarbeitungsvorrichtung (23), welche ausgestaltet ist, Objektabmessungen von Objekten (62, 63), mit denen das Fahrzeug (61) zu beladen ist, zu bestimmen, und
eine Anordnung der Objekte (62, 63) in einem Laderaum des Fahrzeugs (61) in Abhängigkeit von den Objektabmessungen der Objekte (62, 63) und einer Laderaumabmessung des Laderaums zu bestimmen,
**dadurch gekennzeichnet, dass** die Verarbeitungsvorrichtung (23) ferner ausgestaltet ist, eine Sicherung für die in dem Laderaum angeordneten Objekte (62, 63) in Abhängigkeit von der Anordnung der Objekte (62, 63) in dem Laderaum zu bestimmen, wobei die Sicherung eine Bewegung der Objekte (62, 63) in dem Laderaum einschränkt, und
die Sicherung für die Objekte (62, 63) als Ladungssicherungsempfehlung über die grafische Benutzeroberfläche (22) auszugeben.

15. Computerprogrammprodukt, welches ein Programm umfasst und direkt in einen Speicher (24) einer programmierbaren Vorrichtung (20) ladbar ist, mit Programm-Mitteln, um alle Schritte (11-18) des Verfahrens (10) nach einem der Ansprüche 1-12 auszuführen, wenn das Programm in der programmierbaren Vorrichtung (20) ausgeführt wird.
